# EUROPÄISCHE PATENTSCHRIFT

(11) **EP 2 374 644 B1**
(45) Veröffentlichungstag und Bekanntmachung des Hinweises auf die Patenterteilung: **12.06.2013**
(21) Anmeldenummer: 11001667.2
(22) Anmeldetag: 01.03.2011
(51) Int. Cl.: B60J 5/10, B60J 5/04

(54) **Verbundbauteil für einen Kraftwagen**
Compound component for a motor vehicle
Élément composite pour un véhicule automobile

(30) Priorität: 10.04.2010 DE 102010014534
(43) Veröffentlichungstag der Anmeldung: 12.10.2011
(73) Patentinhaber: Daimler AG, 70327 Stuttgart (DE)
(72) Erfinder: Reese, Eckhard, 21641 Apensen (DE)
(74) Vertreter: JENSEN & SON

(56) Entgegenhaltungen:
- DE-A1-102006 050 144
- DE-U1-202008 015 391

## Beschreibung

Die Erfindung betrifft ein Verbundbauteil, insbesondere eine Tür, für einen Kraftwagen der im Oberbegriff des Patentanspruchs 1 angegebenen Art. Des Weiteren betrifft die Erfindung ein Verfahren zur Herstellung eines solchen Verbundbauteils gemäß dem Oberbegriff des Patentanspruchs 5.

Aus dem Serienfahrzeugbau von Personenkraftwagen sind Türen als Verbundbauteile bekannt, welche einen als Türträger ausgebildeten Grundträger umfassen, der außenseitig mit wenigstens einem Außenbeplankungsteil und innenseitig ebenfalls mit wenigstens einem, dem Innenraum des Kraftwagens zugewandten Innenverkleidungsteil verbunden ist. Während der Grundträger beispielsweise aus einem oder mehreren Metallprofilen besteht, welche entsprechend zusammengefügt werden, ist das Außenbeplankungsteil üblicherweise entweder aus Kunststoff oder einem umgeformten Blechteil bzw. das Innenverleidungsteil aus Kunststoff hergestellt. Zur Befestigung des Außenbeplankungsteils und des Innenverkleidungsteils sind dabei eine Mehrzahl von Befestigungselementen am Grundträger anzuordnen, welche aufgrund der Bauweise des Verbundbauteils relativ kompliziert herzustellen sind. Des Weiteren ist bei derartigen Verbundbauteilen gemäß dem Stand der Technik ein entsprechendes Potential zur Gewichtseinsparung und zur einfachen Herstellung stark ausgeschöpft, so dass weitere Fortschritte nur mit erheblichem Kostenaufwand zu realisieren wären.

Aus der DE 10 2006 050 144 A1 ist ein Verbundbauteil bekannt, das als Heckklappe eines Kraftfahrzeugs verwandt wird. Das Verbundbauteil setzt sich im Wesentlichen aus einer Innenverkleidung, einer Außenverkleidung sowie einem Mittelbauteil zusammen. Das Mittelbauteil ist durch ein Metallblech gebildet, das mit Kunststoff zur Bildung von Anbindungspunkten und Versteifungsrippen umspritzt ist.

Aufgabe der vorliegenden Erfindung ist es daher, ein Verbundbauteil sowie ein Verfahren zu dessen Herstellung zu schaffen, wobei sich ein leichtes und genau gefertigtes Bauteil zu relativ günstigen Kosten herstellen lässt.

Diese Aufgabe wird erfindungsgemäß durch ein Verbundbauteil sowie ein Verfahren zu dessen Herstellung mit den Merkmalen der Patentansprüche 1 bzw. 5 gelöst. Vorteilhafte Ausgestaltungen mit zweckmäßigen und nicht-trivialen Weiterbildungen der Erfindung sind in den übrigen Patentansprüchen angegeben.

Das verbindungsgemäße Verbundbauteil zeichnet sich insbesondere dadurch aus, dass dieses äußerst leicht, präzise und dennoch sehr kostengünstig hergestellt werden kann.

Dies wird zunächst ermöglicht durch die Ausgestaltung des Grundträgers als Hybridbauteil, so dass eine Vielzahl von Funktionselementen, welche bislang aufwändigerweise am Grundträger befestigt werden mussten, nunmehr am zumindest partiell vorgesehenen Kunststoff des Hybridbauteils angeordnet sein können. Als Beispiel hierfür seien bei Türen Scharnieranbindungen und Bleche wie das Schlossblech und andere Verstärkungsbleche genannt, die hier beispielsweise als Inserts in den Kunststoff integriert werden können.

Im Ergebnis können durch die Integration von Funktionsbereichen und Funktionsteilen in das Hybridbauteil wesentliche Kosten eingespart werden, welche beim bisherigen Stand der Technik insbesondere durch das nachträgliche Befestigen einzelner Funktionsbereiche an dem Grundträger entstanden.

Ein weiterer Vorteil besteht darin, dass der Grundträger äußerst belastungsgerecht gefertigt werden kann. Zunächst kann das Metallträgerelement auf relativ einfache Weise belastungsgerecht ausgebildet werden, indem dieses beispielsweise unterschiedliche Querschnitte und Wandstärken aufweist. Darüber hinaus kann das Hybridbauteil insgesamt äußerst belastungsgerecht gestaltet werden, indem beispielsweise der Kunststoff an entsprechend zu verstärkenden Stellen an dem Metallträgerelement angebracht und beispielsweise mit Rippen oder dergleichen versehen wird. Zudem können in den Kunststoff auf einfache Weise Verstärkungen oder dergleichen Einleger integriert werden.

Weiterhin vorteilhaft ist es, dass der Kunststoff äußerst genau gefertigt werden kann, so dass sich insgesamt ein besonders maßhaltiges und mit geringen Toleranzen behaftetes Bauteil erzielen lässt.

Das Hüllen- und Baukastenprinzip mit dem Grundträger, dem Außenbeplankungsteil und dem Innenverkleidungsteil ermöglicht zudem eine einfache optische Anpassung an verschiedenste Baureihen, wobei insbesondere der Grundträger gegebenenfalls gleich bleiben kann.

Bei der Erfindung zeigt es sich des Weiteren als vorteilhaft, dass das Metallträgerelement als Innenhochdruckumformteil ausgebildet ist. Ein derartiges Metallträgerelement kann nämlich besonders präzise und belastungsgerecht umgeformt werden.

Weiterhin vorteilhaft ist es, wenn der Kunststoff zumindest partiell in einem Spritzgießverfahren auf das Metallträgerelement aufgebracht worden ist. Ein derartiges Spritzgießverfahren lässt sich besonders gut in einen Hochdruckumformprozess integrieren, so dass insgesamt auf einfache Weise ein Hybridbauteil geschaffen werden kann. Das kombinierte Innenhochdruckumform- und Spritzgussverfahren wird vorzugsweise in einem einzigen gemeinsamen Werkzeug hergestellt, was verfahrensökonomisch vorteilhaft ist und wodurch Fertigungstoleranzen durch Umsetzen des Metallträgerelementes von einem Werkzeug in ein anderes vermieden werden. Des Weiteren bedeutet dies eine erhebliche Reduzierung des apparativen Aufwandes und der damit zusammenhängenden Kosten sowie des für die Herstellung vorzusehenden Raumes in der Werkhalle. Zudem können beim kombinierten Innenhochdruckumform- und Spritzgussverfahren zusätzliche Funktionsbereiche des Metallträgerelements bzw. des Grundträgers positionstreu und ohne Verbindungselemente geschaffen werden. Dies schafft zum einen eine Verbauungssicherheit, so dass keine Nacharbeiten für die Montage anfallen, und zum anderen eine Verringerung des Gewichtes des hergestellten Verbundbauteils und des damit einhergehenden Fügeaufwandes.

Das Metallträgerelement wird vorteilhafter Weise vor dem kombinierten Innenhochdruckumform- und Spritzgussverfahren aus mehreren Einzelhohlprofilen zusammengesetzt und dann in das für die beiden Verfahren gemeinsame Werkzeug eingelegt. Das Zusammensetzen kann eine einfache Steckverbindung ggf. mit Durchsetzfügepunkten sein oder aber eine fluid- und druckdichte Schweiß- oder Lötverbindung.

Weiterhin vorteilhaft ist es, wenn das Metallträgerelement und der Kunststoff in einer kathodischen Tauchlackierung lackierbar sind. Ein derartiges Hybridbauteil kann somit besonders einfach gegen Korrosion geschützt werden.

In weiterer Ausgestaltung der Erfindung hat es sich als zudem vorteilhaft gezeigt, wenn das Metallträgerelement eine Mehrzahl von Hohlprofilen umfasst, welche formschlüssig miteinander verbunden sind. Durch die Mehrzahl von Hohlprofilen kann somit ein Metallträgerelement geschaffen werden, welches besonders günstig auf die partiell unterschiedlichen Belastungen angepasst ist.

Weiterhin vorteilhaft ist es, wenn das Metallträgerelement eine Mehrzahl von Hohlprofilen umfasst, welche durch den Kunststoff miteinander verbunden sind. Hierdurch ergibt sich eine besonders einfache Verbindung zwischen den einzelnen Hohlprofilen des Metallträgerelements.

Eine weitere Ausführungsform sieht vor, dass das Metallträgerelement eine Mehrzahl von Hohlprofilen umfasst, welche durch Verbindungsbleche miteinander verbunden sind. Hierdurch kann ein besonders stabiles und steifes Metallträgerelement geschaffen werden.

Wird in weiterer Ausgestaltung der Erfindung der Kunststoff des Hybridbauteils mit Verstärkungselementen versehen, so ergibt sich eine einfache Möglichkeit zur punktuellen bzw. partiellen Aussteifung des Grundträgers.

Schließlich hat es sich als vorteilhaft gezeigt, wenn das Innenverkleidungsteil eine Dichtungsgegenfläche umfasst. So ist auf einfache Weise eine Tür, Klappe oder dergleichen zu schaffen, welcher eine äußerst genaue Dichtungsgegenfläche aufweist.

Die vorstehend im Zusammenhang mit dem erfindungsgemäßen Verbundbauteil genannten Vorteile gelten in ebensolcher Weise für das Verfahren zur Herstellung eines solchen Verbundbauteils gemäß Patentanspruch 5.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1a, 1b: eine perspektivische Explosionsdarstellung eines Außenbeplankungsteils, eines Grundträgers und eines Innenverkleidungsteils des Verbundbauteils sowie eine lediglich symbolische Schnittdarstellung des Verbundbauteils, aus welcher dessen mehrteiliger Aufbau schematisch erkennbar wird;
- Fig. 2a, 2b, 2c, 2d, 2e: eine Perspektivansicht auf das Innenverkleidungsteil des Verbundbauteils sowie jeweilige ausschnittsweise Perspektiv- bzw. Schnittansichten auf Funktionsbereiche des Innenverkleidungsteils;
- Fig. 3: eine Perspektivansicht auf das Außenbeplankungsteil sowie einer Heckscheibe eines als Heckklappe eines Kombinationskraftwagens ausgebildeten Verbundbauteils;
- Fig. 4a, 4b, 4c, 4d: eine Perspektivansicht auf den als Hybridbauteil ausgebildeten Grundträger, eine Vorderansicht sowie drei Schnittansichten auf das Metallträgerelement des Grundträgers, eine ausschnittsweise Perspektivansicht auf einen Teilbereich des Hybridbauteils, in welchem Rippen aus Kunststoff in einem Kreuzungspunkt über eine Kugelkalotte mit dem Metallträgerelement formschlüssig verbunden sind, und eine Vorderansicht auf den Grundträger mit verschiedenen Funktionsbereichen wie einem Schlossblech und Verstärkungsblechen insbesondere im Bereich der Scharniere;
- Fig. 5: zwei perspektivische Schnittansichten von jeweiligen Varianten zur Verfügung von verschiedenen Rohr-Hohlprofilen des Metallträgerelements durch elektromagnetische Umformung;
- Fig. 6: vier schematische Darstellungen zur Erläuterung des Prozesses des Heißgasumformens eines Hohlprofils des Metallträgerelements des Grundträgers;
- Fig. 7: zwei schematische Schnittansichten zur Erläuterung der Verbindung von zwei Hohlprofilen durch Innenhochdruck umformen bzw. durch Umformen mittels einer Kunststoffschmelze oder eines Schiebers;
- Fig. 8: wiederum zwei schematische Schnittansichten zur Erläuterung der Verbindung zwischen zwei Hohlprofilen des Metallträgerelements durch Hydroclinchen;

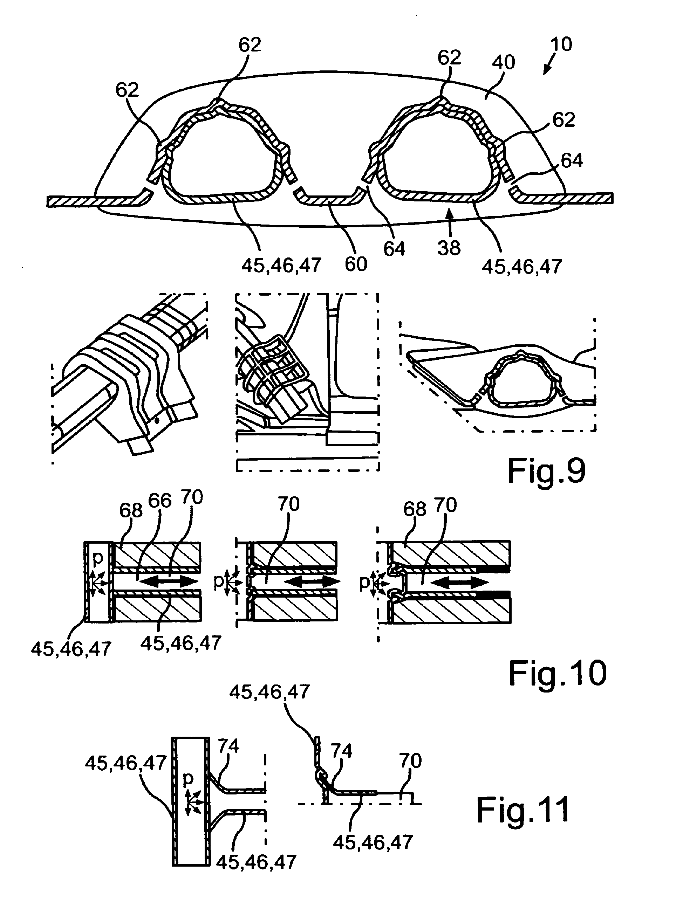

- Fig. 9: eine Schnittansicht durch das Hybridbauteil im Bereich einer Verbindungsstelle zwischen zwei Hohlprofilen und einem Tiefziehblech, welche mit Kunststoff umspritzt sind; unten links eine ausschnittsweise Perspektivansicht auf den als Hybridbauteil gestalteten Grundträger im Bereich einer Versteifung; unten in der Mitte eine ausschnittsweise Perspektivansicht auf das Hybridbauteil im Bereich einer Anbindung eines Schlossblechs, und unten rechts eine Schnittansicht im Bereich einer Verbindungsstelle eines Hohlprofils mit einem weiteren Tiefziehblech, wobei die Metallbauteile mit Kunststoff umspritzt sind;
- Fig. 10: drei schematische Schnittansichten auf ein Werkzeug in einem Innenhochdruckumformprozess, über welches zwei Hohlprofile miteinander verbunden werden;
- Fig. 11: zwei ausschnittsweise Schnittansichten zur Darstellung eines Prozesses zum Innenhochdruck umformfügen durch vorherige Rohrabstellung;
- Fig. 12: eine ausschnittsweise Schnittansicht des Metallträgerelements des Hybridbauteils im Bereich einer Gaswiederanbindung;
- Fig. 13: eine schematische Schnittansicht auf eine Werkzeugschließeinrichtung eines Innenhochdruckumformwerkzeugs, mittels welcher ein Hohlprofil des Metallträgerelements des Hybridbauteils durch Biegung umformbar ist;
- Fig. 14: eine schematische Darstellung eines Werkzeugs, mittels welchem in einem Innenhochdruckumformprozess Buchsenlöcher in ein Hohlprofil des Metallträgerelements einbringbar sind;
- Fig. 15: eine Perspektivansicht auf das Innenverkleidungsteil sowie eine ausschnittsweise Perspektivansicht auf eine Schweißverbindung des Innenverkleidungsteils mit dem Hybridbauteil; und in
- Fig. 16: eine ausschnittsweise Schnittansicht auf die Verbindung des Außenbeplankungsteils mit dem Hybridbauteil bzw. mit dem Innenverkleidungsteil.

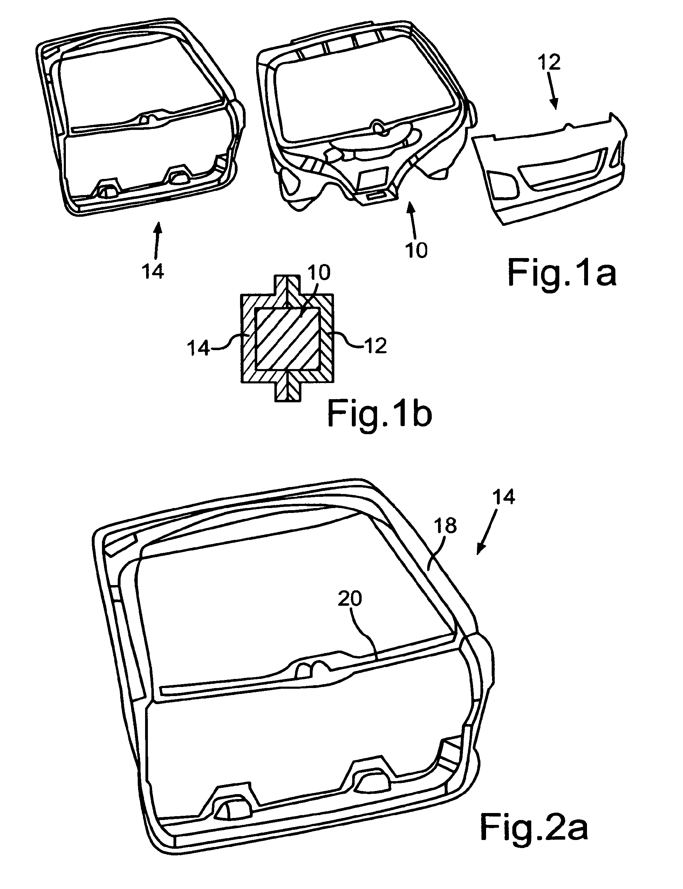

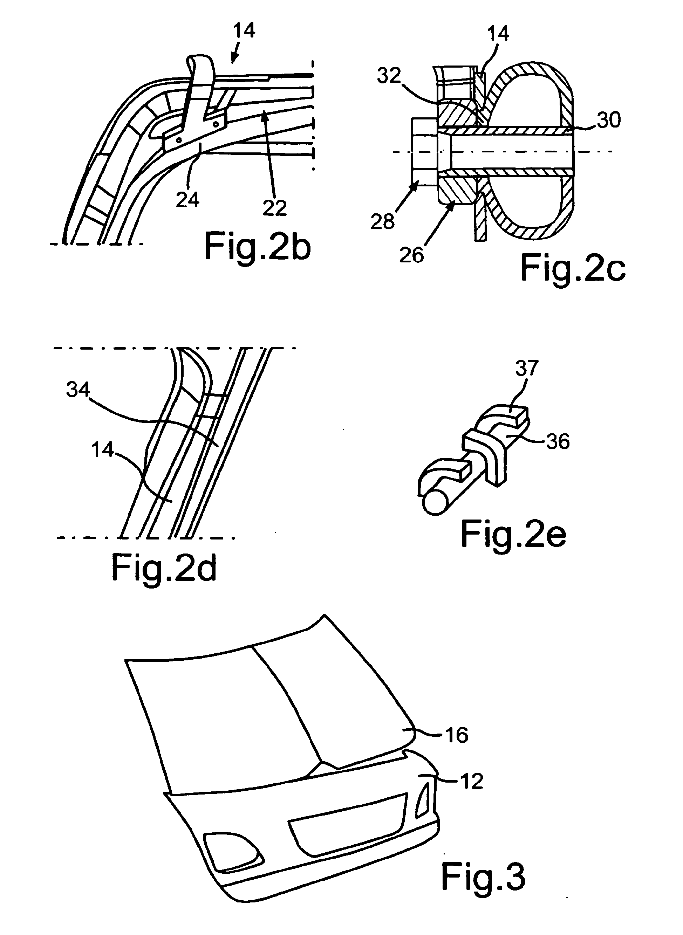

In Fig. 1a ist in einer perspektivischen Explosionsdarstellung ein Verbundbauteil in Form einer Tür bzw. Heckklappe für einen Kombinations-Personenkraftwagen dargestellt. Die Heckklappe bzw. das Verbundbauteil umfasst vorliegend im Wesentlichen drei Einzelelemente, nämlich einen Grundträger 10, welcher außenseitig mit einem Außenbeplankungsteil 12 und innenseitig mit einem dem Innenraum des Kraftwagens zugewandten Innenverkleidungsteil 14 zumindest mittelbar verbunden ist. Zusätzlich ist im vorliegenden Ausführungsbeispiel als Außenbeplankungselement noch eine in Fig. 3 erkennbare Heckscheibe 16 vorgesehen. Weiterhin ist aus Fig. 1 erkennbar, dass die vorliegende mehrteilige Heckklappe bzw. Rückwandtür symmetrisch aufgebaut ist.

Fig. 1b zeigt eine äußerst schematische und symbolische Schnittansicht durch das Verbundbauteil bzw. die Heckklappe, wobei insbesondere erkennbar ist, dass vorliegend ein Aufbau im Hüllenprinzip gewählt ist, d. h. dass sich der Grundträger 10 zwischen dem Außenbeplankungsteil 12 einerseits und dem Innenverkleidungsteil 14 andererseits befindet. Dabei ist es jedoch nicht zwingend erforderlich, dass der Grundträger 10 vollständig von den diesen umgebenden Bauteilen - dem Außenbeplankungsteil 12 und dem Innenverkleidungsteil 14 - umschlossen ist.

Anhand der nachfolgend erläuterten Fig. 2a bis 2e soll nun zunächst der Aufbau und die Funktion des Innenverkleidungsteils 14 erläutert werden. Fig. 2a zeigt dabei eine Perspektivansicht auf das komplette Innenverkleidungsteil 14, welches im vorliegenden Fall aus einem Kunststoff besteht. Da das Innenverkleidungsteil 14 hauptsächlich Optikanforderungen zu erfüllen hat, besteht dieses vorliegend aus einem nichthochbelastbaren Kunststoff, beispielsweise PP LGF20. Dabei ist aus Fig. 2a erkennbar, dass das Innenverkleidungsteil 14 im Wesentlichen einen umlaufenden Rahmen 18 und ein in Querjoch 20 auf Höhe einer Bordkante zwischen der Heckscheibe 16 und dem oberen Ende des Außenbeplankungsteils 12 umfasst.

Fig. 2b zeigt in einer ausschnittsweisen Perspektivansicht einen Eckbereich des Innenverkleidungsteils 14, wobei erkennbar ist, dass ein der Karosserie bzw. dem Innenraum zugewandter Bereich 22 des Innenverkleidungsteils 14 als Dichtungsgegenfläche ausgebildet ist, welcher mit einer umlaufenden Tür- bzw. Klappendichtung 24 auf Seiten des Kraftwagenaufbaus zusammenwirkt. Lediglich im geringen Maße trägt das Innenverkleidungsteil 14 auch zur Aussteifung der gesamten Heckklappe bzw. des gesamten Verbundteils bei. Außerdem dient sie zur Aufnahme des Grundträgers 10. Durch das gleichzeitige Hinterspritzen von Dekortextilien kann dabei beispielsweise eine ansprechende Optik des Innenverkleidungsteils 14 auf der dem Innenraum zugewandten Seite erreicht werden.

In Fig. 2c ist eine schematische Schnittansicht auf das Verbundbauteil im Bereich einer Scharnieranbindung dargestellt. Erkennbar ist dabei ein Scharnierhebel 26, der über eine in eine Stahlbuchse 30 eingedrehte Schraube 28 am Grundträger 10 festgelegt ist. Zwischen dem Scharnierhebel 26 und dem Grundträger 10 ist dabei das Innenverkleidungsteil 14 angeordnet und grenzt an einen Absatz 32 des Grundträgers 10 an, welcher gleichzeitig eine Abdichtung gegenüber äußeren Einflüssen gewährt und den erforderlichen metallischen Kraftschluss in der Verbindung zum Fahrzeug sicherstellt. Dabei bildet das im Verkleidungsteil 14 eine dichtende Kunststoffabdeckung.

In Fig. 2d ist in einer weiteren ausschnittsweisen Perspektivansicht ein weiteres Beispiel für eine Funktionsintegration in das Innenverkleidungsteil 14 erkennbar. Erkennbar ist dabei die Kunststoffanspritzung 34 der TPE-Dichtung für die Heckscheibe 16, welche vorliegend in einem so genannten 2K-Spritzgießverfahren hergestellt wird.

Schließlich zeigt Fig. 2e in einer ausschnittsweisen Perspektivansicht ein Beispiel für eine zusätzliche Funktionsintegration, wobei vorliegend ein Kabel 36 durch entsprechende, an dem Innenverkleidungsteil 14 angespritzte Kabelführungselemente 37 am Innenverkleidungsteil 14 bzw. am Verbundbauteil anordenbar ist. Die Kabelführungselemente 37 bilden dabei einen Kabelkanal, so dass das Kabel 36 nachträglich angebracht werden kann. Die Kabel können beispielsweise für Heizelemente, Motoren oder weitere Verbraucher genutzt werden.

Insgesamt ist somit aus den Fig. 2a bis 2e erkennbar, dass eine Vielzahl von Funktionsintegrationen in das Innenverkleidungsteil 14 möglich ist, ohne dass für separate Bauteile eingesetzt werden müssen. Vielmehr können diese funktionellen Bereich oder Bauteile in den Kunststoff des Innenverkleidungsteils 14 integriert werden.

Fig. 3 zeigt im vorliegenden Fall nicht nur das Außenbeplankungsteil 12, welches beispielsweise aus Kunststoff oder einem Metallblech oder einem anderen Werkstoff bestehen kann, sondern auch die Heckscheibe 16.

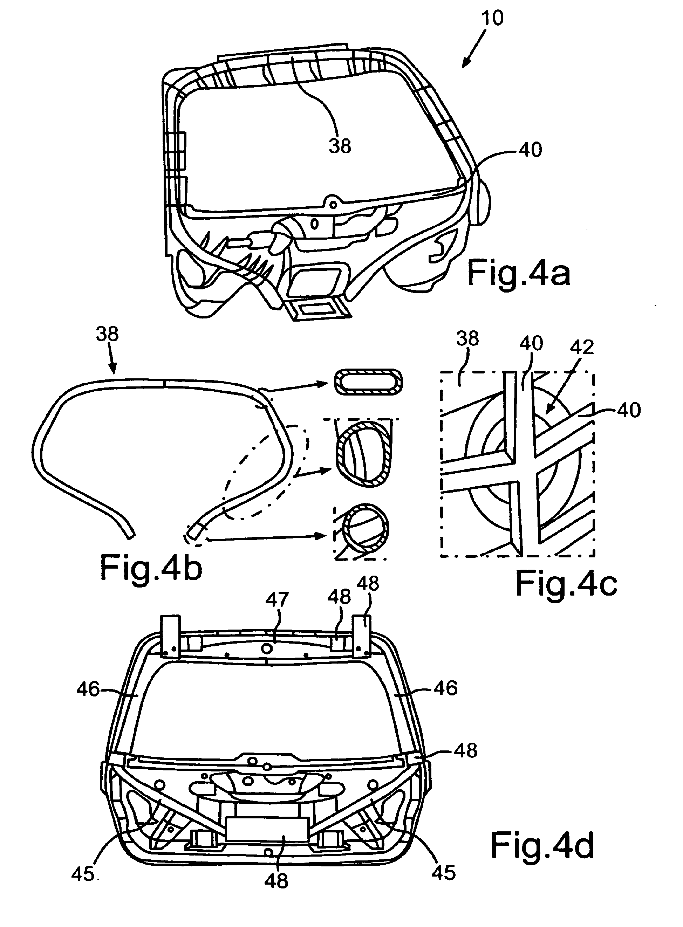

Anhand der Fig. 4a bis 4d soll nun im weiteren der Aufbau des Grundträgers 10 als Hybridbauteil erläutert werden.

Fig. 4a zeigt dabei zunächst eine Perspektivansicht auf ein fertiges Hybridbauteil als Grundträger 10, welches im Wesentlichen aus einem in Fig. 4b in einer Vorderansicht dargestellten Metallträgerelement 38 besteht, welches zumindest partiell mit einem Kunststoff 40 versehen bzw. im vorliegenden Fall umspritzt worden ist.

Wie aus Fig. 4b erkennbar ist, ist im vorliegenden Ausführungsbeispiel das Metallträgerelement 38 als Rohr aus einer Aluminiumlegierung hergestellt, welches kathodisch tauchlackiert werden kann. Der Querschnitt über den Rohrverlauf ist dabei beispielsweise in einem Innenhochdruckumformprozess oder einem Heißgasumformprozess variabel gestaltbar und somit an jeweilig auftretende Belastungen oder für die Anbindung von Anbaubauteilen anpassbar. Dies ist insbesondere in den rechten, vergrößerten Darstellungen von Fig. 4b erkennbar.

In Fig. 4a erkennbare Anspritzung besteht aus einem höher belastbaren Kunststoff 40, z. B. aus PA 60 EF, welcher ebenfalls kathodisch tauchlackiert werden kann. Dabei hat der Kunststoff 40 überwiegend eine tragende und versteifende Funktion, wobei er aber gleichzeitig auch als Schnittstelle zum Fahrzeug dient und somit auch im Kraftfluss steht zwischen dem Metallträgerelement 38 und dem Kraftwagenaufbau. Darüber hinaus nimmt im vorliegenden Fall der Kunststoff 40 entsprechende Einleger, Verstärkungen und Verstärkungsbleche auf.

Der Kunststoff 40 umfasst neben belastungsorientierten Rippen 42, wie diese beispielsweise in Fig. 4c erkennbar sind, auch Funktionsflächen oder andere Funktionsbereiche, um Packaging-Bauteile wie beispielsweise Scheibenwischermotoren, Rückleuchten, Notentriegelungen oder dergleichen aufzunehmen und zu befestigen.

Wie insbesondere aus Fig. 4c in einer ausschnittsweisen und vergrößerten Perspektivansicht erkennbar sind, können innerhalb des Metallträgerelements 38 Kugelkalotten vorgesehen sein, welche insbesondere an Kreuzungspunkten der Rippen 42 positioniert sind. Dabei wird zwischen dem Kunststoff 40 und den vertieften Kugelkalotten ein Formschluss zwischen dem Metallträgerelement 38 und dem Kunststoff 40 erzielt, der ein Verschieben des Kunststoffs 40 bzw. der Rippen 42 relativ zu dem Metallträgerelement 38 beispielsweise aufgrund von Vibrationen oder dergleichen verhindert.

Alternativ zu der Ausführungsform gemäß Fig. 4b kann das Metallträgerelement 38 auch baukastenähnlich aus mehreren Profilen, beispielsweise Rohrprofilen aufgebaut werden, um eine optimale Anpassung an auftretende Belastungen zu erreichen bzw. in wenig belasteten Bereichen durch Materialreduktion Gewicht einzusparen. Die optimale Anpassung an die auftretenden Belastungen kann insbesondere über eine geeignete Werkstoff-, Querschnitts- oder Wandstärkenwahl erfolgen. In Fig. 4d ist hierzu eine weitere schematische Vorderansicht auf eine im Grundträger 10 der Heckklappe dargestellt, wobei dort in einem unteren Bereich Rohrelemente 45 mittleren Querschnitts, in einem oberen Bereich Rohrelemente 46 großen Querschnitts und in einem mittleren oberen Bereich Rohrelemente 47 kleinen Querschnitts vorgesehen sind. Des Weiteren sind dort eine Mehrzahl von Verstärkungen 48, beispielsweise Verstärkungsblechen, erkennbar, welche zur Schloss- oder Scharnieranbindung oder dergleichen Versteifung dienen.

Anstelle der Ausführungsform des Metallträgerelements 38 gemäß Fig. 4b wäre es auch denkbar, anstelle eines konventionellen Rohrhalbzeugs bereits querschnitts- und wandstärkenangepasste Rohre (tailored tubes) einzusetzen. Diese Rohrhalbzeuge können entweder bereits vor dem Einlegen in ein Innenhochdruckumformwerkzeug oder erst durch den Innenhochdruckumformprozess im Werkzeug selbst gefügt werden. Auch ist eine Teilweisefügung vor dem Einlegen in das Werkzeug denkbar.

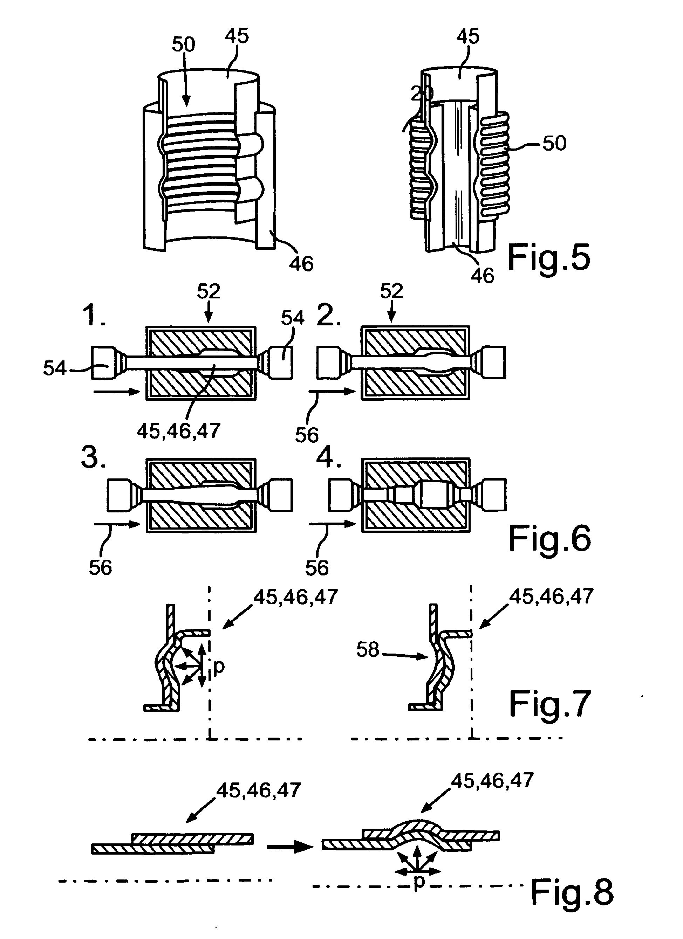

Fig. 5 zeigt in zwei ausschnittsweisen und geschnittenen Perspektivansichten eine Möglichkeit zum Fügen der einzelnen Halbzeuge bzw. Rohrelemente 45, 46 des Metallträgerelements 38.

Bei der Fügung vor dem eigentlichen Innenhochdruckumformprozess wäre z. B. das Verfahren der elektromagnetischen Umformung denkbar, wobei in Fig. 5 links eine Expansionsspule und rechts eine Kompressionsspule dargestellt ist. Nach dem Zusammenstecken der Rohrelemente 45, 46 wird dabei entweder eine Spule 50 von innen her (Expansionsspule) bzw. von außen her (Kompressionsspule) im Fügebereich der jeweiligen, miteinander zu fügenden Rohrelementen 45, 46 angelegt. Durch die der jeweiligen, miteinander zu fügenden Rohrelementen 45, 46 angelegt. Durch die Entladung einer angeschlossenen Kondensationsbatterie entsteht ein Magnetfeld der Spule 50, wodurch in den zu fügenden Werkstoffwänden ein Strom induziert wird, der den Rohrverbund gegen entsprechende Kavitäten in der Werkzeugwand bzw. im Fügepartner drückt. Somit entsteht eine formschlüssige Verbindung.

Alternativ zu einer einstückigen Ausgestaltung gemäß Fig. 4b oder durch elektromagnetische Umformung miteinander verbundene Rohrelemente 45, 46 gemäß Fig. 5 könnte das Metallträgerelement 38 auch aus mehreren Rohrelementen 45, 46 bestehen, in welche zunächst Dome oder dergleichen eingeformt werden, über welche die Rohrelemente 45, 46 zusammengesteckt werden können und anschließend durch Erzeugung einer formschlüssigen Hinterschnittkontur miteinander verbunden werden können. Dieses Erzeugen der Dome bzw. der anschließenden Hinterschnittkontur der Steckverbindungen der Rohrelemente 45, 46 kann beispielsweise durch Heißgasumformen oder Innenhochdruckumformen (Hydroclinchen) vorgenommen werden. Aufgrund der geringen Bruchdehnung von Aluminiumlegierungen (ungefähr 8 %), aus welchen die Rohrelemente 45, 46 vorzugsweise gebildet sind, geschieht die Ausformung von Domen in einem Rohr bevorzugterweise über das Heißgasumformen.

Dieses Heißgasumformen ist dabei anhand von Fig. 6 in vier Prozessschritten näher erläutert. Der Prozess des Heißgasumformens verläuft dabei ähnlich wie das Innenhochdruckumformen, wobei beim Heißgasumformen jedoch ein Gas als Medium dient und das Halbzeug warm umgeformt wird, so dass wesentlich höhere Umformgrade erzielbar sind. In einem ersten Verfahrensschritt wird dabei das entsprechende Rohrelement 45, 46, 47 außerhalb des Werkzeugs 52 vorgewärmt. Danach wird das entsprechende Rohrelement 45, 46, 47 - wie oben links in der ersten Darstellung erkennbar - in das ebenfalls beheizte Werkzeug 52 eingelegt. Das Werkzeug 52 bildet dabei die Negativform der zu erzielenden Bauteilgeometrie (Kavität). Insbesondere ist demzufolge im Werkzeug 52 mindestens eine Negativform eines Doms vorgesehen, welcher im Nachfolgenden zum Zusammenstecken und Verbinden der einzelnen Rohrelemente 45, 46, 47 dient. Axialstempel 54 dichten dabei die offenen Enden des jeweiligen Rohrelements 45, 46, 47 ab. Über die Axialstempel 54 wird sodann das Druckmedium in Form des Gases in den Hohlraum des Rohrelements 45, 46, 47 eingeleitet, so dass dieser mit einem Innendruck beaufschlagt wird. Neben der Beaufschlagung mit dem Innendruck erfolgt zudem ein Nachschieben von Material des Rohrelements 45, 46, 47 in das Werkzeug 52 bzw. in die Kavität hinein, was durch den Pfeil 56 symbolisch angedeutet ist. Durch den Innendruck und das Nachschieben von Material passt sich das Halbzeug besonders gut an die Werkzeugform an. Dies ist in den Verfahrensschritten 2 bis 4 erkennbar. Unter hohem Druck wird das Bauteil zudem im letzten Schritt kalibriert. Der Vorteil beim Heißgasumformen liegt in den hohen erreichbaren Umformgraden von beispielsweise etwa 250 % bis 300 % und den scharf ausformbaren Radien, wobei hier beispielsweise geringe Zykluszeiten von 15 bis 30 Sekunden - je nach Bauteilgröße - erforderlich sind.

Im Anschluss an das Heißgasumformen gemäß Fig. 6 werden dann die Rohrelemente 45, 46, 47 derart gefügt, dass der entsprechend ausgeformte Dom des einen Rohrelements 45, 46, 47 in das andere Rohr hinein geschoben wird.

Wie aus Fig. 7 erkennbar ist, kann im Anschluss nach dem Zusammenstecken der Rohrelemente 45, 46, 47 ein Formschluss derart erzeugt werden, dass in einem Innenhochdruckumformwerkzeug mit Hilfe eines Innenhochdruckumformdrucks eine weiche Hinterschnittkontur nach außen erreicht wird. Dies ist in der linken Darstellung von Fig. 7 erkennbar. Alternativ hierzu kann in einem Innenhochdruckumformwerkzeug, in welchem zusätzlich der Kunststoff 40 angespritzt wird, die Kunststoffschmelze genutzt werden, um gemäß der rechten Darstellung von Fig. 7 gemäß dem Pfeil 58 eine formschlüssige Verbindung bzw. einen Hinterschnitt zu erzeugen. Alternativ hierzu kann von außen her auch ein Schieber eingesetzt werden, um die formschlüssige Verbindung der Rohrelemente 45, 46, 47 herzustellen.

Eine alternative Fügung vor dem Innenhochdruckumform- und Spritzgussprozess wäre auch bei einem Aufbau aus direkt miteinander verschweißten Rohren möglich, die dann als ein Rohreinleger im Werkzeug umgeformt und umspritzt werden. Auch wären Flansch- oder Muffenverbindungen möglich.

Eine teilweise Fügung wäre z. B. durch das Ineinanderschieben von Rohrelementen 45, 46, 47 vor dem Innenhochdruckumform- und Spritzgussprozess möglich. Dies ist in den beiden Darstellungen von Fig. 8 in einer jeweiligen schematischen Schnittansicht erkennbar. Hier kann auch bereits eine Presspassung zwischen den Rohrelementen 45, 46, 47 erzeugt werden. Im entsprechenden Werkzeug würde dann über Hydroclinchen und Kunststoffumspritzen eine direkte Verbindung der Rohre entstehen.

Gemäß Fig. 9 ist eine weitere Möglichkeit zur Herstellung von Verbindungen im Bereich des Grundträgers 10 dargestellt. Wie aus der Schnittansicht in Fig. 9 oben erkennbar ist, werden bei der Fügung zunächst die Rohrelemente 45, 46, 47 einzeln in das Werkzeug eingelegt und dann über zuvor eingelegte Tiefziehbleche 60 indirekt durch den Innenhochdruckumformprozess miteinander verbunden. Im vorliegenden Fall ist dabei ein Doppelhybridknoten gezeigt, wobei durch Hydroclinchen und anschließendes Umspritzen ein Formschluss zwischen den jeweiligen Rohrelementen 45, 46, 47 entsteht. Die einzelnen Hydroclinchstellen 62 zwischen dem Tiefziehblech und dem jeweiligen Rohrelement 45, 46, 47 sind dabei mit dem Bezugszeichen 62 markiert. Zudem können innerhalb des Tiefziehblechs 60 eine Mehrzahl von Durchspritzpunkten 64 vorgesehen sein, wodurch der Kunststoff 40 formschlüssig mit dem Tiefziehblech 60 bzw. dem zu schaffenden Knoten der Rohrelemente 45, 46, 47 verbunden ist. Der Kunststoff 40 selbst kann dabei eine Kunststoffumrippung aufweisen. In den unteren drei Darstellungen von Fig. 9 ist dabei links eine Versteifung des unteren äußeren Eckbereichs des Grundträgers 10 dargestellt. In der Mitte ist eine Anbindung eines Schlossblechs erkennbar, und rechts eine nochmalige Verbindung eines der Rohrelemente 45, 46, 47 mit dem Tiefziehblech 60 unter Vermittlung des Kunststoffs 40.

In Fig. 10 ist in drei schematischen Schnittansichten eine weitere Möglichkeit gezeigt, wie zwei Rohrelemente 45, 46, 47 des Metallträgerelements 38 miteinander verbunden werden können. Hierbei handelt es sich um eine direkte Verbindung im Werkzeug, welche im Innenhochdruckumformprozess möglich ist. Hierbei werden zwei senkrecht zueinander angeordnete Rohrelemente 45, 46, 47 formschlüssig miteinander verbunden, indem durch den Innenhochdruckumformdruck das eine Rohrelement 45, 46, 47 in eine entsprechende Kavität 66 des Werkzeugs 68 geschoben wird. Innerhalb der Kavität 66 kann dabei beweglicher Gegenhalter 70, beispielsweise eine verfahrbare Hülse vorgesehen sein. Mit steigendem Innenhochdruck wird dann die Hülse aus der Kavität 66 im Rohrinneren des einen Rohrelements 45, 46, 47 herausgezogen, und zwar unter Ausbildung eines entsprechenden Doms 72 bzw. eines entsprechenden Formschlusses zwischen den einzelnen Rohrelementen 45, 46, 47. Zudem könnte hier auch wider das Verfahren der elektromagnetischen Umformung eingesetzt werden.

In Fig. 11 ist darüber hinaus eine weitere Variante des Verfahrens gemäß Fig. 10 erkennbar, wobei vorliegend eines der zu fügenden Rohrelemente 45, 46, 47 in einem Bereich 74 abgestellt, d. h. entsprechend aufgeweitet ist. Wiederum durch Beaufschlagung mit einem Innenhochdruck, wie dies aus Fig. 11 erkennbar ist, kann dabei eine formschlüssige Verbindung zwischen den beiden Rohrelementen 45, 46, 47 erzeugt werden. Dabei kann wiederum innerhalb der Kavität 66 des einen Rohrelements 45, 46, 47 ein Gegenhalter 70 positioniert sein.

Eine weitere Ausführungsform sieht vor, dass zur weiteren Verstärkung insbesondere in hochbelasteten Bereichen auch ein zusätzliches Einbringen von Textilstruktureinlegern zur Schaffung von Organoblechen oder netzverstärkten Organoblechen oder dergleichen denkbar ist. Die Textilstruktureinleger werden demzufolge vorzugsweise in den Kunststoff 40 eingelegt.

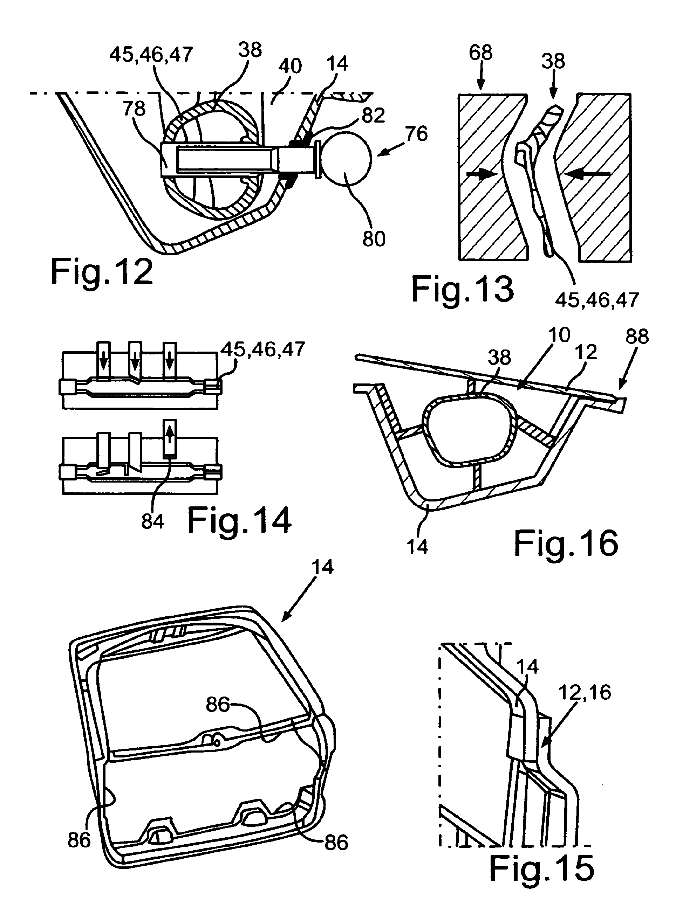

Eine weitere Gestaltung des Grundträgers 10 ist in Fig. 12 in einer schematischen Schnittansicht erkennbar. Dabei wird deutlich, dass für die Anbindung der Heckklappe an das Fahrzeug über die Scharniere und die Gasdämpfungsfedern 76 entsprechende Gewindebuchsen 78 in das entsprechende Rohrelement 45, 46, 47 eingesetzt werden, die die Aufnahme von Schrauben oder Kugelkopfbolzen 80 ermöglichen. Über eine Ausbeulung im entsprechenden Rohrelement 45, 46, 47 im Bereich der Scharnieranbindung wird dabei ein metallischer Kraftfluss erzielt. Zwischen dem dem Grundträger 10 verkleidenden Innenverkleidungsteil 14 und dem Kugelkopf 80 ist dabei eine Dichtung 82 vorgesehen.

Das Herstellungsverfahren bzw. der Prozess zur Herstellung des Verbundbauteils läuft nun folgendermaßen im Wesentlichen dreistufig ab:
Im ersten Schritt wird zunächst das Halbzeug des Metallträgerelements 38 - beispielsweise wie in Fig. 4b angedeutet - umgeformt. Dies kann beispielsweise zunächst in lediglich einer Ebene geschehen. Des Weiteren werden dann beispielsweise alle Inserts, wie Versteifungsbleche, Schlossverstärkungen und andere Funktionsbereiche an dem Metallträgerelement 38 angebracht. Hierzu werden die Versteifungsbleche,
Schlossverstärkungen oder andere Funktionsbereiche zunächst in eine Innenhochdruckumform-Spritzgussmaschine eingelegt. Danach wird das Metallträgerelement 38 mit den Öffnungen für die Innenhochdruckumformstempel z. B. nach oben eingelegt. Durch Schließung des Werkzeugs - wie dies beispielsweise in Fig. 13 in einer schematischen Schnittansicht äußerst symbolisch dargestellt ist - in der dritten Dimension umgeformt.

Im Weiteren wird dann das Metallträgerelement 38 in dem Innenhochdruckumformprozess umgeformt. Da ist es gegebenenfalls erforderlich, dass sich die Innenhochdruckumformstempel überkreuzen, je nach dem wie die Enden des Metallträgerelements 38 zueinander positioniert sind.

Anschließend erfolgt im selben Prozessschritt innerhalb der Innenhochdruckumform- und Spritzgießmaschine auf die Kunststoffumspritzung des Metallträgerelements 38. Das Aufbringen des Kunststoffs 40 kann wie gesagt lediglich partiell erfolgen, und umfasst insbesondere auch die Anspritzung von Funktionsflächen und Funktionsbereichen. Dabei wird das Metallträgerelement 38 mit den Inserts formschlüssig beispielsweise durch Hydroclinchen und um Spritzen verbunden, wie dies beispielsweise in Fig. 9 dargestellt ist. Ebenfalls im gleichen Prozessschritt werden Löcher 84 für Buchsen oder dergleichen in das Metallträgerelement 38 eingestanzt, wie dies aus Fig. 14 erkennbar ist. Nach der Entnahme aus dem Werkzeug werden nur noch die Gewindebuchsen in das entsprechend durch die Löcher 84 vorbereitete Metallträgerelement 38 eingesetzt.

Im zweiten Hauptschritt wird parallel zum Innenhochdruckumform-Spritzgussprozess das Innenverkleidungsteil 14 und gegebenenfalls das Außenbeplankungsteil 12 in einer separaten Maschine gespritzt. Die zeitgleichen ablaufenden Prozesse erlauben eine Verkürzung der Fertigungszeit.

Im dritten Hauptschritt schließlich wird die mehrteilige Heckklappe zusammengesetzt. Wird z. B. eine umlaufende Laserschweißfügefläche 86 des Innenverkleidungsteils 14, welche in Fig. 15 links in einer Perspektivansicht erkennbar ist, wird das Innenverkleidungsteil 14 mit dem gemäß dem ersten Hauptschritt in geschaffenen Grundträger 10 stoffschlüssig, beispielsweise per Hybridlaserschweißen, verbunden. Dies ist in der rechten Darstellung von Fig. 15 nochmals in einer ausschnittsweisen Perspektivansicht erkennbar. Das Hybridlaserschweißen erfordert dabei eine Überlappung der zu verschweißenden Bauteile sowie einen Laserstrahl transmittierenden Werkstoff und einen Laserstrahl absorbierenden Werkstoff. Aufgrund des beispielsweise hohen Glasfasergehalts des Grundträgers 10 lässt der Laserstrahl diesen nicht durchdringen. Deshalb dient das Innenverkleidungsteil 14 als durchlässiges Bauteil und der Grundträger 10 als absorbierendes Bauteil. Über einen Strukturkleber und eine hierfür vorgesehene Klebefläche können anschließend Außenbeplankungsteil 12 beispielsweise vor dem kathodischen Tauchlackieren sowie die Heckscheibe 16 nach dem kathodischen Tauchlackieren an dem Innenverkleidungsteil 14 bzw. dem Grundträger 10 angebracht werden.

Dies ist insbesondere aus Fig. 16 erkennbar, welcher im Bereich einer Fügestelle 88 ein Strukturkleber zwischen dem Innenverkleidungsteil 14 und dem Außenbeplankungsteil 12 bzw. der Heckscheibe 16 vorgesehen ist.

Im Anschluss an das kathodische Tauchlackieren kann dann noch die endgültige Lackierung der Heckklappe erfolgen.

Insgesamt ist somit erkennbar, dass durch die vorliegende Erfindung eine kostengünstige Montage des Verbundbauteils geschaffen werden kann. Dies wird erreicht durch den Einsatz der Technologie des Innenhochdruckumform-Umspritzens kombiniert mit Inserts, z. B. für die Scharnieranbindung und Bleche mit dem Schlossblech oder andere Verstärkungsbleche.

## Patentansprüche

1. Verbundbauteil, insbesondere Tür, für einen Kraftwagen, mit einem Grundträger (10), welcher außenseitig mit einem Außenbeplankungsteil (12) und innenseitig mit einemim montierten Zustand des Verbundbauteils, dem Innenraum des Kraftwagens zugewandten Innenverkleidungsteil (14) verbunden ist, **dadurch gekennzeichnet, dass**
der Grundträger (10) als Hybridbauteil ausgebildet ist, welches wenigstens ein zumindest partiell mit einem Kunststoff (40) versehenes als Innenhochdruckumformteil ausgebildetes Metallträgerelement (38) aufweist.

2. Verbundbauteil nach Anspruch 1,
**dadurch gekennzeichnet, dass**
das Metallträgerelement (38) mit dem Kunststoff (40) zumindest partiell umspritzt ist.

3. Verbundbauteil nach einem der vorhergehenden Ansprüche,
**dadurch gekennzeichnet, dass**
das Metallträgerelement (38) eine Mehrzahl von Hohlprofilen (45, 46, 47) umfasst, welche durch den Kunststoff (40) miteinander verbunden sind.

4. Verbundbauteil nach einem der vorhergehenden Ansprüche,
**dadurch gekennzeichnet, dass**
das Innenverkleidungsteil (14) eine Dichtungsgegenfläche (22) umfasst.

5. Verfahren zur Herstellung eines Verbundbauteils, insbesondere einer Tür, für einen Kraftwagen, bei welchem ein Grundträger (10) außenseitig mit einem Außenbeplankungsteil (12) und innenseitig mit einem im montierten Zustand des Verbundbanteils, dem Innenraum des Kraftwagens zugewandten Innenverkleidungsteil (14) verbunden wird,
**dadurch gekennzeichnet, dass**
der Grundträger (10) durch wenigstens ein Metallträgerelement (38) mittels Innenhochdruckumformen gebildet wird, welches zur Schaffung eines Hybridbauteils zumindest partiell mit einem Kunststoff (40) versehen wird.

6. Verfahren nach Anspruch 5,
**dadurch gekennzeichnet, dass**
das Metallträgerelement (38) mit dem Kunststoff (40)zumindest partiell umspritzt wird.

7. Verfahren nach Anspruch 5 oder 6,
**dadurch gekennzeichnet, dass**
das Metallträgerelement (38) in einem kombinierten Innenhochdruckumform- und Spritzgussverfahren hergestellt wird.

8. Verfahren nach einem der Ansprüche 5 bis 7,
**dadurch gekennzeichnet, dass**
das Metallträgerelement (38) und der Kunststoff (40) in einer kathodischen Tauchlackierung lackiert werden.

## Claims

1. Composite component, in particular door, for a motor vehicle, comprising a base carrier (10) to the outside of which is joined an external cladding part (12) and to the inside of which is joined an internal lining part (14) which in the mounted state of the composite component faces the interior of the motor vehicle,
**characterised in that**
the base carrier (10) is a hybrid component comprising at least one metal carrier element (38) which is at least partially provided with a plastic material (40) and which is designed as a hydroformed component.

2. Composite component according to claim 1,
**characterised in that**
the metal carrier element (38) is at least partially coated with the plastic material (40) by injection moulding.

3. Composite component according to any of the preceding claims,
**characterised in that**
the metal carrier element (38) comprises a plurality of hollow sections (45, 46, 47) which are joined to one another by the plastic material (40).

4. Composite component according to any of the preceding claims,
**characterised in that**
the internal lining part (14) comprises a mating seal surface (22).

5. Method for producing a composite component, in particular a door, for a motor vehicle, wherein the outside of a base carrier (10) is joined to an external cladding part (12) and the inside is joined to an internal lining part (14) which in the mounted state of the composite component faces the interior of the motor vehicle,
**characterised in that**
the base carrier (10) comprises at least one metal carrier element (38) produced in a hydroforming process, which is at least partially provided with a plastic material (40) to produce a hybrid component.

6. Method according to claim 5,
**characterised in that**
the metal carrier element (38) is at least partially coated with the plastic material (40) by injection moulding.

7. Method according to claim 5 or 6,
**characterised in that**
the metal carrier element (38) is produced in a combined hydroforming and injection moulding process.

8. Method according to any of claims 5 to 7,
**characterised in that**
the metal carrier element (38) and the plastic material (40) are coated in a cathodic dip painting process.

## Revendications

1. Élément composite, en particulier une porte, pour un véhicule automobile, doté d'un support de base (10) qui est relié côté extérieur à un élément de recouvrement extérieur (12) et - lorsque l'élément composite est monté - côté intérieur à un élément d'habillage intérieur (14) orienté vers l'intérieur du véhicule, **caractérisé en ce que** le support de base (10) est conçu comme un élément hybride, qui présente au moins un élément support métallique (38) pourvu au moins partiellement de matière plastique (40) et conçu comme une pièce formée par haute pression interne.

2. Élément composite selon la revendication 1, **caractérisé en ce que** l'élément support métallique (38) est enrobé au moins partiellement par la matière plastique (40).

3. Élément composite selon l'une quelconque des revendications précédentes, **caractérisé en ce que** l'élément support métallique (38) comprend une pluralité de profilés creux (45, 46, 47) qui sont reliés les uns aux autres par la matière plastique (40).

4. Élément composite selon l'une quelconque des revendications précédentes, **caractérisé en ce que** l'élément d'habillage intérieur (14) comprend une contre-surface d'étanchéité (22).

5. Procédé de fabrication d'un élément composite, en particulier d'une porte, destiné à un véhicule automobile, un support de base (10) étant relié côté extérieur à un élément de recouvrement extérieur (12) et - lorsque l'élément composite est monté - côté intérieur à un élément d'habillage intérieur (14) orienté vers l'intérieur du véhicule, **caractérisé en ce que** le support de base (10) est formé par au moins un élément support métallique (38) au moyen du moulage à haute pression intérieure, ledit élément support métallique (38) étant pourvu au moins partiellement de la matière plastique (40) afin de créer un élément hybride.

6. Procédé selon la revendication 5, **caractérisé en ce que** l'élément support métallique (38) est enrobé au moins partiellement par la matière plastique (40).

7. Procédé selon la revendication 5 ou la revendication 6, **caractérisé en ce que** l'élément support métallique (38) est fabriqué par un procédé de moulage par injection combiné à un procédé de moulage à haute pression interne.

8. Procédé selon l'une quelconque des revendications 5 à 7, **caractérisé en ce que** l'élément support métallique (38) et la matière plastique (40) sont enduits d'un vernis au trempé à dépôt cathodique.
